**Europäisches Patentamt**

**European Patent Office**

**Office européen des brevets**

(19)

(11) Veröffentlichungsnummer: **0 291 684 B1**

## EUROPÄISCHE PATENTSCHRIFT

(12)

(45) Veröffentlichungstag der Patentschrift: **15.01.92**

(51) Int. Cl.⁵: $B60T \ 13/14$

(21) Anmeldenummer: **88105586.7**

(22) Anmeldetag: **08.04.88**

---

(54) **Bremskraftverstärker.**

---

(30) Priorität: **09.05.87 DE 3715565**

(43) Veröffentlichungstag der Anmeldung:
**23.11.88 Patentblatt 88/47**

(45) Bekanntmachung des Hinweises auf die
Patenterteilung:
**15.01.92 Patentblatt 92/03**

(84) Benannte Vertragsstaaten:
**DE FR GB SE**

(56) Entgegenhaltungen:
**DE-A- 2 527 928**
**DE-B- 1 232 827**
**DE-B- 2 259 528**
**US-A- 3 284 143**

(73) Patentinhaber: **ROBERT BOSCH GMBH**
**Postfach 50**
**W-7000 Stuttgart 1(DE)**

(72) Erfinder: **Schmitt, Edgar, Ing.-grad.**
**Am Wolfsberg 111**
**W-7143 Vaihingen/Enz(DE)**
Erfinder: **Siegel, Heinz, Ing.-grad.**
**Hohenloher Strasse 86**
**W-7000 Stuttgart 40(DE)**

# Beschreibung

Die Erfindung betrifft einen Bremskraftverstärker gemäß der Gattung des Hauptanspruchs. Ein derartiger, durch die DE-A-2 259 528 bekannter Bremskraftverstärker besitzt in einem Gehäuse eine Servokammer und einen verschiebbaren Servokolben und in diesem angeordnet einen Raum, der mit der Servokammer kommuniziert. Dem Raum zugeordnet ist ein erstes Sitzventil zum Verbinden des Raums mit einer Rücklaufleitung zu einem Vorratsbehälter und ein zweites Sitzventil zum Verbinden des Raums mit einem Speicher- bzw. einer sich aus dem Vorratsbehälter versorgenden Pumpe. Das erste Sitzventil befindet sich näher bei einem Bremspedal als das zweite Sitzventil. Eine mittels des Bremspedals betätigbare Kolbenstange ragt in das Gehäuse hinein zur Betätigung des ersten und des zweiten Sitzventils und auch zur Übertragung einer Kraft auf den Servokolben. Das erste Sitzventil besitzt als Schließelement einen Ventilkegel und wenigstens eine koaxial ausgerichtete zylindrische Führungsfläche und ist mittels der Kolbenstange über eine Feder gegen den fest mit dem Servokolben vereinigten Ventilsitz drückbar. Das zweite Sitzventil hat einen mit dem Servokolben vereinigten Ventilsitz und als Schließelement eine Ventilkugel, die zum Ventilsitz hin mittels einer Feder belastet ist. Mittels eines an die Kolbenstange angesetzten Betätigungsglieds ist die Ventilkugel gegen die Kraft der Feder und gegen den von der Pumpe gelieferten Druck öffenbar. Zum Verschieben des Servokolbens mittels Servodruck wird über die zwischen der Kolbenstange und dem Ventilkegel des ersten Sitzventils befindliche Feder der Ventilkegel an den Ventilsitz angelegt. Hier behindert die zylindrische Führungsfläche des Ventilkegels die freie Ausrichtung des Ventilkegels zu seinem Ventilsitz, so daß das erste Sitzventil gegebenenfalls nur unvollkommen schließbar ist. Wird zwischen dieser wenigstens eine zylindrischen Führungsfläche und einer weiteren, die sich beispielsweise am Servokolben befindet, ein die Ausrichtung förderndes Spiel vorgesehen, so tritt im Servobetrieb nachteilige Leckage auf, mit der Folge, daß die Pumpe zum Ersetzen von Leckage einzuschalten ist. Hierdurch entsteht Energieverlust und Lärm. Nach dem Anlegen des Ventilkegels ist mittels des Betätigungsglieds nach Überwindung der Kraft der Feder und des auf der Ventilkugel lastenden Drucks die Ventilkugel von ihrem Sitz abhebbar. Ein Abheben bewirkt einen Flüssigkeitsstrom in den Raum und von da aus in die Servokammer und auf die Rückseite des Ventilkegels. Es ist schwierig, ein solches Kugelventil feinfühlig zu steuern. Dies ist nachteilig beim Einstellen eines gewollten Bremsdrucks. Ein weiterer Nachteil besteht darin, daß der Andrückung des Ventilkegels mit der Kraft der zugeordneten Feder nun auch noch eine Druckbeaufschlagung mit Druck aus der Servokammer überlagert wird. Diese Druckbeaufschlagung kann das gegebenenfalls noch unvollkommen geschlossene erste Sitzventil plötzlich schließen und deshalb zu einem nachteiligen ruckartigen Bremsdruckanstieg führen.

Der Erfindung soll die Aufgabe zugrundeliegen, das Schließverhalten der Ventile in einem gattungsgemäßen Bremskraftverstärker zu verbessern, wobei insbesondere das Zentrieren der Ventile erleichtert werden soll. Diese Aufgabe wird mit den Merkmalen des Anspruchs 1 gelöst.

Ein Bremskraftverstärker mit den Merkmalen des Anspruchs 1 weist zur Bildung des einen Ventils zum Einlassen der Bremsflüssigkeit in die Servo-Kammer eine Ventilbuchse mit einem Ringkragen auf, dem ein Ventilsitz in einer Sacklochbohrung in dem Servokolben zugeordnet ist. Andererseits dieses Ventils besitzt die Ventilbuchse einen randseitig abgerundeten Boden, der in einen kelchartigen Ventilsitz eines Ventilkegels eingreift. Dies bedeutet, daß die Ventilbuchse auf keiner Seite mit einem sonstigen Element des Bremskraftverstärkers fest verbunden ist. Sie schwimmt somit zwischen dem Ventilsitz und dem Ventilkegel und kann somit leicht zentriert werden.

Das Zentrieren wird noch dadurch erleichtert, daß die Ventilsitze jeweils kelch- oder kugelartig ausgebildet sind, wobei der jeweilige Ringkragen bzw. Boden dieser Form angepaßt ist. Damit wird gewährleistet, daß beim Schließen des Ventils der Ringkragen in den Ventilsitz eingleitet.

Von der Kolbenstange ragt ein Schieber ab, welcher mit seiner Stirn das Schließglied für das Auslaßventil bildet. Dieser Schieber kann in der Kolbenstange in begrenztem Umfang beweglich angeordnet sein, es ist jedoch auch denkbar, daß er der Kolbenstange selbst angeformt ist. In jedem Fall durchsetzt er aber die Ventilbuchse. Dabei soll erfindungsgemäß zwischen Ventilbuchse und Schieber bzw. Kolbenstange eine Feder angeordnet sein, über welche der Schieber die Ventilbuchse auch bei seiner Bewegung unter Bremsdruck mitnimmt und in Schließlage mit dem Ventilkegel hält. Dadurch wird nur zwischen einem Ventilsitz und der Ventilbuchse ein Öffnungsspalt hergestellt. Dies vermeidet, daß die Ventilbuchse infolge von Strömungskräften zwischen zwei Ventilsitzen hin und her pendelt und Vibrationen verursacht. Außerdem ist die Schließfähigkeit besser, weil nur ein Ende der Ventilbuchse beim Schließen zu zentrieren ist.

Im übrigen greift der Schieber in einen Innenraum des Ventilkegels ein, wobei sich der Innenraum an seinem bodenwärtigen Ende ebenfalls wieder kelchartig verjüngt und in einer Axialbohrung durch den Ventilsitz ausläuft. Diese Verjüngung bildet den Ventilsitz, auf den die Stirnfläche des Schiebers paßt. Da der Schieber mit radialem Spiel in dem Innenraum geführt ist, kann die Rückführung der Servo-Bremsflüssigkeit aus der Servo-Kammer durch Zwischenräume zwischen Ventilbuchse und Schieber erfolgen.

Weiterhin ist eine Radialbohrung vorgesehen, welche den Innenraum mit einer den Ventilkegel teilweise umgebenden Kammer verbindet. In dieser Kammer ist der Ventilkegel, beispielsweise durch Ausbildung eines Ringkragens über eine Feder gegen eine entsprechende Anschlagscheibe abgestützt. Die Radialbohrung bleibt sowohl beim Öffnen wie auch beim Schließen des Auslaßventils für die Servo-Bremsflüssigkeit offen, so daß aus der Kammer jederzeit Flüssigkeit austreten und in die Kammer Flüssigkeit eingesaugt werden kann.

Für den den einen Teil des Einlaßventils bildenden Ventilsitz ist es zwar denkbar, daß dieser Ventilsitz aus dem Servokolben selbst herausgeformt ist. Allerdings würde dies bedingen, daß der Servokolben selbst aus zwei Teilen besteht, da beispielsweise die Ventilbuchse von innen her dem Ventilsitz anliegt. Deshalb ist vorgesehen, diesen Ventilsitz von einer Ringhülse bilden zu lassen, welche wiederum bevorzugt zwischen einer Hülse und einer Lochplatte in der Sacklochausnehmung in dem Servokolben lagert. Dabei stützt sich die Lochplatte in Ruhelage gegen einen Sprengring ab, so daß die Ringhülse nur in sehr begrenztem Umfang beweglich ist.

In diesem Fall umfängt die Hülse den gesamten Ventilkegel und teilweise auch die Ventilbuchse und bildet beispielsweise zwischen den beiden Sitzen der Ventilbuchse einen Ringraum zur Verbindung mit dem Vorratsbehälter bzw. dem Speicher für Servo-Bremsflüssigkeit. Auch die Kammer, in der die Feder für den Ventilkegel lagert, wird dann zwischen Hülse und Ventilkegel bzw. einer Stange gebildet. Diese Stange, welche von der Axialbohrung durchzogen wird, durchsetzt den Boden der Hülse und weist andererseits einen Sprengring auf, so daß der Ventilkegel nicht aus dem Boden der Hülse herausgleiten kann. Im Anschluß daran befindet sich die Schrägbohrung, welche zurück zum Vorratsbehälter führt.

Bei diesem Ausführungsbeispiel ist besonders das gute Schließverhalten durch die gelenkige Ventilbuchse hervorzuheben.

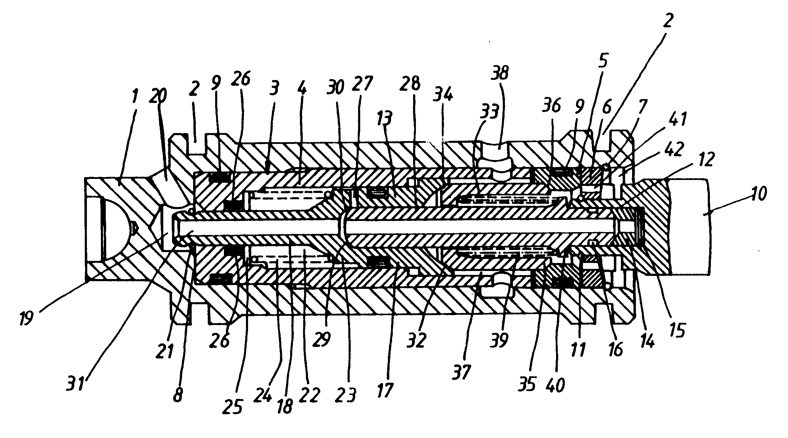

Die Erfindung wird nachfolgend anhand der Zeichnung näher erläutert. Diese zeigt in ihrer einzigen Figur einen Längsschnitt durch einen erfindungsgemäßen Bremskraftverstärker.

Der Bremskraftverstärker weist einen Servokolben 1 auf, der in einem nicht näher gezeigten Gehäuse eines Hauptbremszylinders sitzt, wobei er in diesem Gehäuse durch in Nuten 2 vorgesehene Dichtungen geführt ist.

Der Servokolben 1 besitzt eine axiale Sacklochausnehmung 3. Diese Sacklochausnehmung 3 ist im wesentlichen von einer Hülse 4 ausgekleidet, an welche eine Ringhülse 5 anschließt, die von einer Lochplatte 6 belegt ist. Die Lochplatte 6 schlägt an einen im Servokolben 1 festliegenden Sprengring 7 an, während sich andererseits die Hülse 4 an einem Boden 8 der Sacklochausnehmung 3 abstützt. Hülse 4 und Ringhülse 5 besitzen gegenüber dem Servokolben 1 Dichtungen 9.

Durch die Lochplatte 6 greift eine Kolbenstange 10 in die Sacklochausnehmung 3 ein, wobei ein Sprengring 11 ein Herausgleiten der Kolbenstange 10 aus der Lochplatte 6 verhindert.

Stirnwärtig besitzt die Kolbenstange 10 ein Sackloch 12, in welches ein Schieber 13 eingesetzt ist. Dieser stützt sich in dem Sackloch 12 gegen ein Auflager 14 sowie Ausgleichsscheiben 15 ab. Ferner ist er zum Sackloch 12 hin mit einem Dichtring 16 belegt.

Andernends greift der Schieber 13 in einen Ventilkegel 17 ein, der mit einer Stange 18 teilweise in der Hülse 4 geführt ist und in eine Bodenkammer 19 im Servokolben 1 führt. Aus dieser Bodenkammer 19 zweigt eine Schrägbohrung 20 in beispielsweise eine Hauptbremskammer des Hauptbremszylinders ab, welche mit dem Vorratsbehälter für Bremsflüssigkeit in Verbindung steht. In der Bodenkammer 19 ist der Stange 18 noch ein Sprengring 21 aufgeschoben, der den Hubweg der Stange 18 begrenzt.

Zwischen Stange 18 und Hülse 4 wird ferner eine Kammer 22 gebildet, wobei sich die Stange 18 in dieser Kammer 22 kelchartig zu einem Ringkragen 23 erweitert. An diesen Ringkragen 23 schlägt eine Feder 24 an, welche gegenüber auf eine Scheibe 25 trifft, die eine Ringdichtung 26 zwischen Stange 18 und Hülse 4 überdeckt.

Die Kammer 22 steht über eine Radialbohrung 27 in dem Ringkragen 23 mit einem Innenraum 28 in dem Ventilkegel 17 in Verbindung. In diesen Innenraum 28 greift auch der Schieber 13 ein. Dabei ist der Boden des Innenraums 28 als zweiter Ventilsitz 29 ausgebildet, auf den die Stirn 30 des Schiebers 13 als Schließglied paßt. Mit dieser Stirn 30 kann ein Durchlaß zu einer Axialbohrung 31 in dem Ventilkegel 17 bzw. der Stange 18 verschlossen werden.

Nach dem Innenraum 28, in dem der Schieber 13 im übrigen mit radialem Spiel geführt ist, erweitert sich der Ventilkegel 17 nochmals unter Ausbildung eines kelchartigen bzw. kugeligen dritten Ventilsitzes 32. In diesen so geformten dritten Ventilsitz 32 paßt eine Ventilbuchse 33, welche den Schieber 13 ebenfalls mit radialem Spiel umgreift. Der Boden 34 der Ventilbuchse 33 ist unter Bildung eines dritten Ventils 32,34 dem kelchartigen dritten Ventilsitz 32 angepaßt, wodurch das Zentrieren der Ventilbuchse 33 erheblich erleichtert ist. Ebenso ist der Randkragen 35 der Ventilbuchse 33 konvex angepaßt und paßt so in einen ersten Ventilsitz 36, der von der Ringhülse 5 gebildet wird.

Zwischen den beiden Ventilsitzen 32 und 36 wird von der Ventilbuchse 33 und der Hülse 4 ein Ringraum 37 ausgebildet, in dem ein Einlaß 38 für Servo-Bremsflüssigkeit einmündet.

In der Ventilbuchse, d. h. zwischen Ventilbuchse 33 und Schieber 13, befindet sich eine Feder 39, welche sich am Boden der Ventilbuchse 33 und an einem Ringflansch 40 am Schieber 13 abstützt.

In Ruhelage steht der Ventilkegel 17 unter dem Druck der Feder 24. Dabei beaufschlagt er mit dem kelchartigen dritten Ventilsitz 32 die Ventilbuchse 33 und drückt diese mit dem Ringkragen 35 gegen den ersten Ventilsitz 36. Somit kann keine Servo-Bremsflüssigkeit aus dem Ringraum 37 durch das von Ringkragen 35 und Ventilsitz 36 gebildete erste Sitzventil sowie durch Bohrungen 41 in der Lochplatte 6 in eine Servo-Kammer 42 gelangen.

Wird nun ein Bremsdruck auf die Kolbenstange 10 ausgeübt, so verschiebt diese den Schieber 13 nach links, wobei die Stirn 30 des Schiebers 13 auf den zweiten Ventilsitz 29 auftrifft und den Rücklauf für die Servo-Bremsflüssigkeit unterbricht. Über die Feder 39 wird jedoch das erste Sitzventil zwischen Ventilbuchse 33 und Ventilkegel 17 geschlossen gehalten. Wird weiterhin Bremsdruck wirksam, verschiebt sich der Ventilkegel 17 nach links, wobei die Ventilbuchse 33 ihm folgt. Dabei hebt der Randkragen 35 von dem ersten Ventilsitz 36 ab und Servo-Bremsflüssigkeit kann über die Bohrungen 41 in die Servo-Kammer 42 und hinter den Servokolben 1 strömen.

Läßt der Bremsdruck nach, so wird der Ventilkegel 17 und mit ihm die Ventilbuchse 33 nach rechts verschoben, bis der Randkragen 35 dem ersten Ventilsitz 36 anliegt. Sodann hebt der Schieber 13 mit seiner Stirn 30 vom zweiten Ventilsitz 29 ab und die Servo-Bremsflüssigkeit kann aus der Kammer 42, durch die Bohrungen 41 an der Feder 39 vorbei, durch das radiale Spiel zwischen Schieber 13 und Ventilbuchse 33 sowie das radiale Spiel des Innenraums 28 in die Axialbohrung 31 gelangen.

Die Ventilbuchse 33 gewährleistet in jedem Fall durch ihre beidseits gelenkige Ausbildung ein exaktes Schließverhalten des ersten Sitzventils 35/36.

**Patentansprüche**

1.   Bremskraftverstärker mit einem in einem Gehäuse gleitbar gelagerten Servokolben (1) und einer in das Gehäuse ragenden Kolbenstange (10) zur Übertragung einer Bremskraft, mit einem ersten Ventil (35, 36) zum Einlassen von aus einem Speicher oder Vorratsbehälter stammender und über eine Pumpe oder dergleichen geförderter Bremsflüssigkeit in einen von einer im Servokolben (1) befindlichen Servokammer (42) gebildeten Raum, wobei das erste Ventil (35, 36) von einem ersten Ventilkörper (33, 35) und einem in einer Sacklochausnehmung (3) des Servokolbens (1) befindlichen ersten Ventilsitz (36) gebildet ist, und mit einem kelchartigen zweiten Ventilsitz (29), der zusammen mit einem mit der Kolbenstange (10) verbundenen Schieber (13) ein zweites Ventil (13, 29, 30) zum Rückführen der Bremsflüssigkeit zum Speicher oder Vorratsbehälter bildet, dadurch gekennzeichnet, daß der erste Ventilkörper (33,35) in Form einer Ventilbuchse (33) mit einem Ringkragen (35) ausgestaltet ist, der gegen den ersten Ventilsitz (36) gerichtet ist, daß die Ventilbuchse (33) andererseits mit einem Boden (34) in einen kelchartigen, dritten Ventilsitz (32) eines Ventilkegels (17) eingreift und dieserart ein drittes Ventil (32, 34) bereitstellt, und daß der zweite Ventilsitz (29) ebenfalls in dem Ventilkegel (17) untergebracht ist.

2.   Bremskraftverstärker nach Anspruch 1, dadurch gekennzeichnet, daß der erste Ventilsitz (36) kelch- oder kugelartig ausgebildet ist, wobei der Ringkragen (35) eine entsprechend angepaßte Oberfläche aufweist.

3.   Bremskraftverstärker nach Anspruch 1 oder 2, dadurch gekennzeichnet, daß die Ventilbuchse (33) des ersten Ventils (35,36) den Schieber (13) des zweiten Ventils (13,29,30) umfängt und mit dem Schieber über eine Feder (39) in Verbindung steht.

4.   Bremskraftvertärker nach einem der Ansprüche 1 bis 3, dadurch gekennzeichnet, daß im Ventilkegel (17) des dritten Ventils (32,34) eine vom Schieber (13) des zweiten Ventils (13,29,30) mit radialem Spiel durchsetzter Innenbohrung (28) vorgesehen ist, deren Boden den zweiten Ventilsitz (29) bildet, an den sich eine Axialbohrung (31) als Rücklauf anschließt.

5.   Bremskraftverstärker nach Anspruch 4, dadurch gekennzeichnet, daß vor dem zweiten Ventilsitz (29) eine Radialbohrung (27) von der Innenbohrung (28) abzweigt und zu einer Kammer (22) führt, in welcher sich der Ventilkegel (17) des dritten Ventils (32,34) über eine weitere Feder (24) gegen eine Scheibe (25) abstützt.

6.   Bremskraftverstärker nach wenigstens einem der Ansprüche 1 bis 5, dadurch gekennzeichnet, daß der erste Ventilsitz (36) von einer Ring-Hülse (5) gebildet ist, welche zwischen einer Hülse (4) und einer Lochplatte (6) in der Sacklochausnehmung (3) des Servokolbens (1) lagert.

**7.** Bremskraftverstärker nach Anspruch 6, dadurch gekennzeichnet, daß die Lochplatte (6) in Ruhelage an einen Sprengring (7) anschlägt.

**8.** Bremskraftverstärker nach Anspruch 6 oder 7, dadurch gekennzeichnet, daß die Hülse (4) den Ventilkegel (17) des dritten Ventils (32,34) umgibt, jedoch dieser den Boden (8) der Hülse (4) mit einer Stange (18) durchsetzt, welche auch die Axialbohrung (31) besitzt, und dort mit einem Sprengring (21) festgelegt ist.

## Claims

**1.** Servobrake with a servopiston (1) supported so that it can slide in a housing and a piston rod (10) protruding into the housing for the transmission of a brake force, having a first valve (35, 36) for admitting brake fluid, emerging from a reservoir or storage container and driven by means of a pump or the like, into a space formed by a servochamber (42) located in the servopiston (1), the first valve (35, 36) being formed from a first valve body (33, 35) and a first valve seat (36) located in a blind hole recess (3) of the servopiston (1), and having a cup-type second valve seat (29) which, together with a plunger (13) connected to the piston rod (10), forms a second valve (13, 29, 30) for returning the brake fluid to the reservoir or storage container, characterised in that the first valve body (33, 35) is designed in the form of a valve sleeve (33) with an annular collar (35) which is directed against the first valve seat (36), in that the valve sleeve (33) engages at its other end (34) in a cup-type, third valve seat (32) of a valve cone (17) and in this way produces a third valve (32, 34), and in that the second valve seat (29) is also accommodated in the valve cone (17).

**2.** Servobrake according to Claim 1, characterised in that the first valve seat (36) is designed to be of cup-type or spherical type, the annular collar (35) having an appropriately matched surface.

**3.** Servobrake according to Claim 1 or 2, characterised in that the valve sleeve (33) of the first valve (35, 36) surrounds the plunger (13) of the second valve (13, 29, 30) and is connected with the plunger by means of a spring (39).

**4.** Servobrake according to one of Claims 1 to 3, characterised in that there is, in the valve cone (17) of the third valve (32, 34), an internal hole (28) penetrated with radial clearance by the plunger (13) of the second valve (13, 29, 30), the end of which internal hole (28) forms the second valve seat (29) which continues as an axial hole (31) used as the return.

**5.** Servobrake according to Claim 4, characterised in that a radial hole (27) branches off from the internal hole (28) before the second valve seat (29) and leads to a chamber (22) in which the valve cone (17) of the third valve (32, 34) is supported against a washer (25) by means of a further spring (24).

**6.** Servobrake according to at least one of Claims 1 to 5, characterised in that the first valve seat (36) is formed from an annular sleeve (5) which is supported between a sleeve (4) and a perforated plate (6) in the blind hole recess (3) of the servopiston (1).

**7.** Servobrake according to Claim 6, characterised in that the perforated plate (6) is in contact with a spring ring (7) in the rest position.

**8.** Servobrake according to Claim 6 or 7, characterised in that the sleeve (4) surrounds the valve cone (17) of the third valve (32, 34) but that this valve cone (17) penetrates through the end (8) of the sleeve (4) by means of a rod (18) which also possesses the axial hole (31) and which is fixed there by means of a spring ring (21).

## Revendications

**1.** Servo-frein, avec un servo-piston (1) monté de façon à pouvoir glisser dans un carter et avec une tige de piston (10) faisant saillie dans le carter pour transmettre un effort de freinage, avec une première soupape (35, 36) pour permettre l'admission dans un espace formé par une servo-chambre (42) se trouvant dans le servo-piston (1) du liquide de freinage provenant d'une réserve ou d'un réservoir et refoulé par une pompe ou un organe analogue, tandis que la première soupape (35, 36) est constituée par un premier corps de soupape (33, 35) et un premier siège de soupape (36) se trouvant dans un évidement en forme de trou borgne (3) du servo-piston (1), et avec un second siège de soupape (29) en forme de coupe qui constitue conjointement avec un tiroir (13) relié à la tige de piston (10) une seconde soupape (13, 29, 30) pour renvoyer le liquide de freinage à la réserve ou au réservoir, servo-frein caractérisé en ce que le premier corps de soupape (33, 35) est réalisé sous la forme d'une douille de soupape (33) avec une collerette annulaire (35) qui est orientée vers le premier siège de soupape (36), en ce que la douille de soupape (33) vient de son autre côté en prise par son fond (34) dans un troisième siège de soupape en forme de coupe (32) d'un cône de soupape (17), et constitue, de cette façon, une troisième soupape (32, 34), et en ce que le second siège de soupape (29) est également placé dans le cône de soupape (17).

2. Servo-frein selon la revendication 1, caractérisé en ce que le premier siège de soupape (36) revêt la forme d'une coupe ou d'une sphère, tandis que la collerette annulaire (35) a une surface adaptée de façon correspondante.

3. Servo-frein selon la revendication 1 ou la revendication 2, caractérisé en ce que la douille de soupape (33) de la première soupape (35, 36) entoure le tiroir (13) de la deuxième soupape (13, 29, 30) et est en liaison avec le tiroir (13) par l'intermédiaire d'un ressort (39).

4. Servo-frein selon une des revendications 1 à 3, caractérisé en ce que dans le cône de soupape (17) de la troisième soupape (32, 34) il est prévu un perçage interne (28) traversé avec un jeu radial par le tiroir (13) de la seconde soupape (13, 29, 30), tandis que le fond du perçage interne (28) constitue le second siège de soupape (29) auquel se raccorde un perçage axial (31) permettant un écoulement en retour.

5. Servo-frein selon la revendication 4, caractérisé en ce que devant le second siège de soupape (29) un perçage radial (27) part du perçage interne (28) et aboutit à une chambre (22) dans laquelle le cône de soupape (17) de la troisième soupape (32, 34) prend appui, par l'intermédiaire d'un autre ressort (24) contre une rondelle (25).

6. Servo-frein selon au moins une des revendications 1 à 5, caractérisé en ce que le premier siège de soupape (36) est constitué par une douille annulaire (5) qui est montée entre un manchon (4) et une plaque perforée (6) dans l'évidement en forme de trou borgne (3) du servo-piston (1).

7. Servo-frein selon la revendication 6, caractérisé en ce que la plaque perforée (6) vient dans la position de repos en butée contre un jonc (7).

8. Servo-frein selon la revendication 6 ou la revendication 7, caractérisé en ce que le manchon (4) entoure le cône de soupape (17) de la troisième soupape (32, 34), mais que ce cône traverse le fond (8) du manchon (4) avec une tige (18) qui comporte également le perçage axial (31) et qui est fixé par un jonc (21).